# EUROPEAN PATENT APPLICATION

(11) **EP 3 214 824 A1**
(43) Date of publication of application: **06.09.2017**
(21) Application number: 16000996.5
(22) Date of filing: 03.05.2016
(51) Int. Cl.: H04L 29/08, H04L 12/28

(54) **SMART HOME SYSTEM**

(30) Priority: 04.03.2016 TW 105106750
(71) Applicant: Connection Technology Systems Inc., New Taipei City 221 (TW)
(72) Inventor: CHEN, Yu-Hsin, 221 New Taipei City (TW); CHANG, Tzu-Chiang, 221 New Taipei City (TW)
(74) Representative: Zeitler Volpert Kandlbinder Patent- und Rechtsanwälte Partnerschaft mbB

(57) **Abstract**

A smart home system includes plural service provider servers, a gateway and plural home appliances. The gateway is in communication with the plural home appliances and the plural service provider servers. The gateway includes an intermediate module and a wireless receiver module. The intermediate module includes an access control list database and a service installer. The access control list database stores plural digital signatures. Moreover, plural service programs are verified according to the plural digital signatures. The wireless receiver module is in wireless communication with the plural home appliances. After the plural verified service programs are installed in the gateway through the service installer, the service provider servers have access rights to access and control the corresponding home appliances. By using the smart home system, the home life becomes more systematic.

## Description

### FIELD OF THE INVENTION

The present invention relates to a smart home system, and more particularly to a smart home system applied to plural service providers.

### BACKGROUND OF THE INVENTION

As the applications of the internet are expanded, the concepts of an loT (Internet of Things) technology are gradually developed. The loT is the network of physical objects and becomes the important route of the industrial development. Nowadays, gateways are used for establishing communication channels between the service side and the home appliances.

Recently, the concept of a smart home is gradually adopted. For fighting over the industrial interests, the providers of different smart home services develop the exclusive smart home systems that are not compatible to each other. However, different smart home systems are not user-friendly. For example, if a user takes a fancy to a home service that is provided by a provider A and also takes a fancy to a home service that is provided by a provider B, the user cannot use both of the home service of the provider A and the home service of the provider B because the systems and protocols for the home service of the provider A and the home service of the provider B are not compatible. Since the home service of the provider A and the home service of the provider B cannot communicate with each other, the function of the smart home is not complete. In other words, the smart home service provided to the user is restricted to the service system that is built and developed by a specified provider.

### SUMMARY OF THE INVENTION

For overcoming the drawbacks of the conventional technology, the present invention provides a smart home system. The application programs that are developed by plural service providers for various home appliances are compatible with the smart home system. Moreover, the service providers have their service provider servers. After the service provider servers are verified, the service provider servers can control corresponding home appliances through a gateway.

In accordance with an aspect of the present invention, there is provided a smart home system. The smart home system includes plural home appliances, plural service provider servers and a gateway. The gateway is in communication with the plural home appliances and the plural service provider servers. The gateway includes an intermediate module and a wireless receiver module. The intermediate module includes an access control list database and a service installer. The access control list database stores plural digital signatures. In addition, plural service programs are verified according to the plural digital signatures. The wireless receiver module is in wireless communication with the plural home appliances. After the plural verified service programs are installed in the gateway through the service installer, the service provider servers have access rights to access and control the corresponding home appliances.

In an embodiment, the access control list database stores the plural digital signatures, an access right lookup table about a relationship between the plural service provider servers and the home appliances, a schedule distribution table about a relationship between the plural service programs and the plural home appliances and an operation system resource table about the use of the intermediate module by the service programs.

In an embodiment, the gateway further includes a user interface. The user interface includes a graphical interface, a Command Line Interface (CLI), a syslog, a Simple Network Management Protocol (SNMP) agent, a Message Queuing Telemetry Transport (MQTT) client and the plural service programs.

In an embodiment, the intermediate module further includes an event processor. The event unit receives an event notification signal from the plural home appliances and sends the event notification signal to the syslog, the Simple Network Management Protocol (SNMP) agent, the Message Queuing Telemetry Transport (MQTT) client or the plural service programs.

In an embodiment, the graphical interface provides a corresponding graphical interface to a system architecture supplier and/or a service provider, so that the plural home appliances are monitored and managed by the system architecture supplier and/or the service provider through the corresponding graphical interface.

In an embodiment, via the Command Line Interface (CLI), a system architecture supplier inputs a character command to manage the plural home appliances.

In an embodiment, the Message Queuing Telemetry Transport (MQTT) client provides a Message Queuing Telemetry Transport communication protocol interface to a service provider, so that the plural home appliances is monitored by the service provider.

In an embodiment, a system architecture supplier has a permission to manage and control the Command Line Interface (CLI), the syslog and the Simple Network Management Protocol (SNMP) agent.

In an embodiment, the gateway further includes at least one of an input/output alarm, an indication light, a button, a Universal Serial Bus interface, a NAND flash memory and a switch.

In an embodiment, the gateway further includes a driving unit. A signal from at least one of the wireless receiver module, an alarm input of the input/output alarm, the button and the switch is transmitted to the event processor through the driving unit. Moreover, signals from the plural service programs are received by the intermediate module and further transmitted to at least one of the wireless receiver module, an alarm output of the input/output alarm, the indication light, the Universal Serial Bus (USB) interface, the NAND flash memory and the switch through the driving unit.

In an embodiment, the wireless receiver module is a Z-wave wireless receiver module, and the plural home appliances are Z-wave home appliances.

From the above descriptions, the present invention provides a smart home system. The application programs that are developed by plural service providers for various home appliances are compatible with the smart home system. Consequently, the service programs provided by different service providers can be adopted by the smart home system without the incompatible problem. Under this circumstance, the home life becomes more systematic. Moreover, the permissions of various service providers to monitor the home appliances and the monitored contents can be managed by the system architecture supplier through the gateway.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic functional block diagram illustrating the architecture of a smart home system according to an embodiment of the present invention;
FIG. 2 is a schematic functional block diagram illustrating the components of the gateway according to an embodiment of the present invention; and
FIG. 3 is a schematic functional block diagram illustrating an implementation example of the smart home system according to the embodiment of the present invention.

### DETAILED DESCRIPTION OF THE PREFERRED EMBODIMENT

As known, a gateway can be used to connect plural electrical appliances such as monitors, lamps, air conditioners, window curtains, door locks, surveillance devices, and so on. Moreover, the gateway can be connected with a personal computer, a smart phone, a remote controller or a server, and used as a relay station of transmitting/receiving signals.

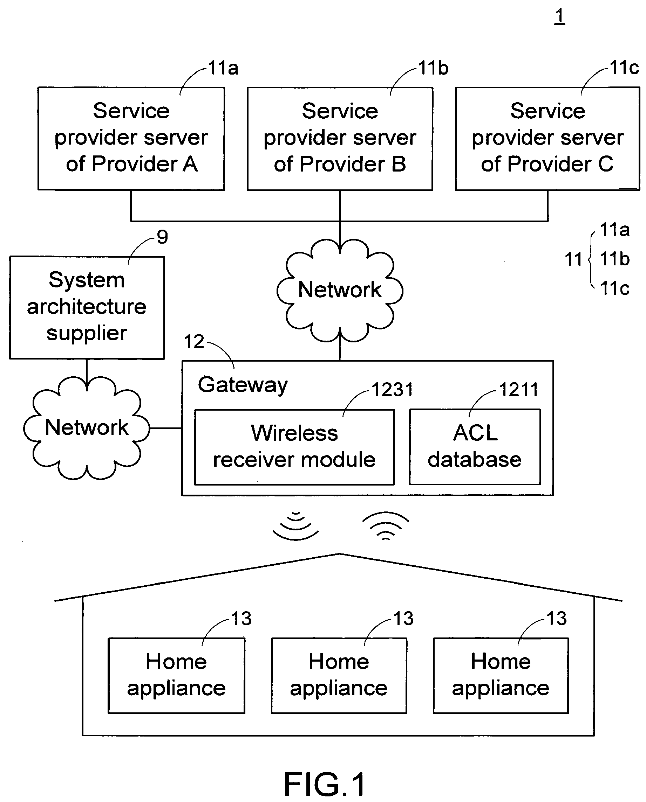

FIG. 1 is a schematic functional block diagram illustrating the architecture of a smart home system according to an embodiment of the present invention. As shown in FIG. 1, the smart home system 1 comprises plural service provider servers 11, a gateway 12 and plural home appliances 13. The plural service provider servers 11 are in communication with the plural home appliances 13 through the gateway 12 in order to achieve the communicating and monitoring functions. That is, the gateway 12 is the communication bridge between the service provider servers 11 and the home appliances 13. The identifying and communicating method of the gateway 12 will be described later.

In this context, the plural service provider servers 11 denote the service provider servers that are possessed managed by different service providers and independently operated according to individual protocols. The plural service provider servers 11 are compatible with the plural home appliances 13 that are provided by a system architecture supplier 9. For example, the service provider server 11 a of a provider A monitors the home appliance 13 (e.g., an IR sensor) that is provided by the system architecture supplier 9 through the gateway 12, the service provider server 11b of a provider B monitors the home appliance 13 (e.g., an electrical appliance switch) that is provided by the system architecture supplier 9 through the gateway 12, and the service provider server 13a of a provider C monitors the home appliance 13 (e.g., a sensor) that is provided by the system architecture supplier 9 through the gateway 12.

In this embodiment, the gateway 12 comprises a wireless receiver module 1231. For example, the wireless receiver module 1231 is a Z-wave wireless receiver module, and the home appliances 13 are home appliances with Z-wave connection functions. Preferably, the gateway 12 and the plural home appliances 13 transmit and receive signals according to a Z-Wave wireless communication protocol. The examples of the home appliances 13 include but are not limited to monitors, lamps, air conditioners, window curtains, door locks, surveillance devices and various sensors.

In accordance with an important feature of the present invention, the gateway 12 of the smart home system 1 is equipped with an open protocol architecture that is defined by the system architecture supplier 9. Because of the open protocol architecture of the gateway 12, the service providers can develop their service programs with optimized operations or functions. When the service programs is executed in the gateway 12 to access the resources of the gateway 12, the home appliances 13 provided by the system architecture supplier 9 can be monitored and managed through the gateway 12.

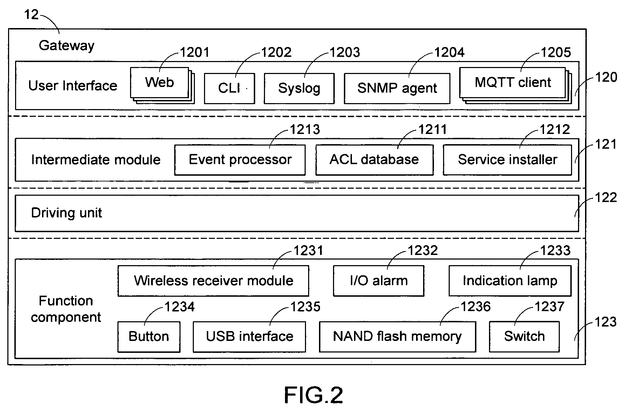

The components of the gateway 12 will be illustrated in more details as follows. FIG. 2 is a schematic functional block diagram illustrating the components of the gateway according to an embodiment of the present invention. As shown in FIG. 2, the gateway 12 comprises a User Interface (UI) 120, an intermediate module 121, a driving unit 122 and plural function components 123. Firstly, the intermediate module 121 will be described as follows. The intermediate module 121 comprises an access control list (ACL) database 1211 and a service installer 1212. The access control list database 1211 stores plural digital signatures. According to the digital signatures, the gateway 12 can judge whether the service provider servers 11 a, 11b and 11c connected with the gateway 12 are the devices owned by the cooperative service providers of the system architecture supplier 9. After the service programs provided by the service provider servers 11 a, 11b and 11c are verified according to the corresponding digital signatures of the access control list database 1211, the gateway 12 further checks whether the text files in the access operation systems of the service programs comply with the specifications of the access control list database 1211. If the text files in the access operation systems of the service programs comply with the specifications of the access control list database 1211, the service programs are installed in the gateway 12 through the service installer 1212. Consequently, the service providers have the access rights to access and control the corresponding home appliances 13.

Moreover, an access right lookup table (not shown) about the relationship between the service provider servers 11 a, 11 b and 11c and the home appliances 13 is included in the access control list database 1211. According to the access right lookup table, the scopes of the access rights of the service provider servers 11a, 11 b and 11c to control the home appliances 13 can be realized. For example, the access rights of the service provider servers 11a, 11b and 11c to only passively control the home appliances 13 or the access rights of the service provider servers 11a, 11 b and 11 c to further issue commands to manage the home appliances 13 are recorded in the access right lookup table.

Moreover, a schedule distribution table (not shown) about the relationship between the service programs and the home appliances 13 and an operation system resource table (not shown) about the use of the intermediate module 121 by the service programs are also stored in the service installer 1212. According to the schedule distribution table and the operation system resource table, the schedules and the resources to be monitored by the service provider servers are clearly determined. For example, the home appliance is a lamp. Moreover, in the schedule distribution table, the schedule is divided into two time segments, including a daytime segment and a nighttime segment. In the daytime segment, the lamp is monitored by the service provider server 11a of the provider A. In the nighttime segment, the lamp is monitored by the service provider server 11 b of a provider B. The schedule distribution is presented herein for purpose of illustration and description only.

As mentioned above, associated data of the cooperative service providers are previously created by the system architecture supplier 9. For example, the operation system accounts of the service providers for the gateway 12 and the available system objects, resources and access rights can be previously created by the system architecture supplier 9. After the verifying process is successfully done, the service provider servers 11a, 11 b and 11c can possess the access rights of monitoring and managing the home appliances. In this context, the system architecture supplier is a supplier who is responsible to construct the whole smart home system 1 and build the infrastructure of the open protocol of the gateway 12 and acts as the supplier of the home appliances. For example, a telecom carrier is one of the appropriate system architecture suppliers. It is noted that the example of the system architecture supplier 9 is not restricted.

Moreover, the intermediate module 121 further comprises an event processor 1213. The event processor 1213 receives an event notification signal from the home appliance 13 and then sends the event notification signal to the user interface 120. For example, the event notification signal is sent to a syslog 1203, a r agent (SNMP agent) 1204, a Message Queuing Telemetry Transport client (MQTT client) 1205 or the service programs. The detailed procedures will be described as follows.

The components of the user interface 120 will be illustrated in more details as follows. The user interface 120 comprises a graphical interface (Web) 1201, a Command Line Interface (CLI) 1202, the syslog 1203, the SNMP agent 1204 and the MQTT client 1205 and the service programs. The graphical interface 1201 can support the operations of various machines through the network. For example, the graphical interface 1201 can submit a service request through the network. The service providers and/or the system architecture supplier 9 can monitor and manage the operations of the home appliances 13 through the graphical interface 1201. In a preferred embodiment, the system architecture supplier 9 has a complete graphical interface for monitoring and operating the smart home network and equipment, and the service provider has a simple graphical interface for monitoring and operating the home appliances 13. The Command Line Interface 1202 is a keyboard input interface in a character mode, or the Command Line Interface 1202 is an output of simple characters. The system architecture supplier 9 can input a character command through the Command Line Interface 1202 in order to manage the operations of the home appliances 13.

The MQTT client 1205 is a publish/subscribe messaging protocol in a machine-to-machine (M2M) manner. Moreover, the MQTT client 1205 has low bandwidth and low hardware requirement. In an embodiment, the service provider servers 11 a, 11b and 11c receive the message from the gateway 12 through the MQTT client 1205 in order to monitor the operations of the home appliances 13.

The syslog 1203 issues an event to the system architecture supplier 9 through a unix syslog communication protocol interface. Consequently, the operations of the home appliances 13 are monitored by the system architecture supplier 9.

The SNMP agent 1204 provided a network management interface to the system architecture supplier 9. Consequently, the operations of the home appliances 13 are monitored and controlled by the system architecture supplier 9.

More especially, the system architecture supplier 9 has a permission to manage and control the CLI 1202, the syslog 1203 and the SNMP agent 1204. Consequently, the system architecture supplier 9 can manage the permissions of the service provider servers 11 a, 11b and 11c and further coordinate and manage the operations of the home appliances 13.

Moreover, the plural function components 123 of the gateway 12 comprises an input/output (I/O) alarm 1232, an indication lamp 1233, a button 1234, a Universal Serial Bus (USB) interface 1235, a NAND flash memory 1236 and a switch 1237. According to the practical situations, the signals from various service programs are received by the intermediate module 121 and further transmitted to the wireless receiver module 1231, the alarm output of the I/O alarm 1232, the indication lamp 1233, the USB interface 1235, the NAND flash memory 1236 and the switch 1237 through the driving unit 122. Similarly, according to the practical situations, the signals generated in respond to various events are transmitted from the wireless receiver module 1231, the alarm input of the I/O alarm 1232, the button 1234 and the switch 1237 to the event processor 1213 through the driving unit 122. Then, the event processor 1213 inquires the access control list database 1211. Consequently, the signals generated in respond to various events are transmitted to the corresponding service programs. Afterwards, the signals are transmitted via the MQTT client 1205 so as to be published.

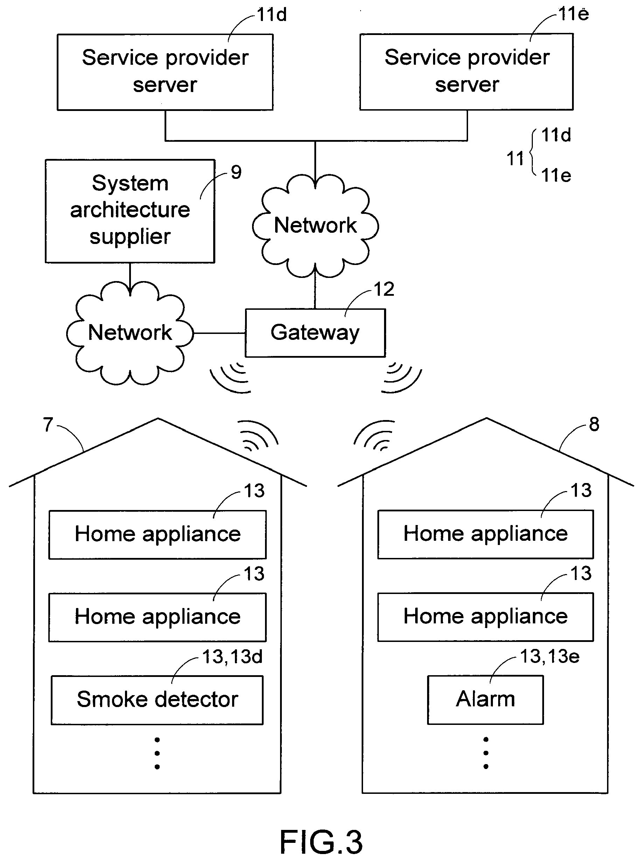

FIG. 3 is a schematic functional block diagram illustrating an implementation example of the smart home system according to the embodiment of the present invention. As mentioned above, the gateway 12 has an open architecture. Consequently, the service provider servers 11 can communicate with the gateway 12 to acquire the information contents from the home appliances 13. The architecture of this embodiment is similar to that of FIG. 1. In comparison with FIG. 1, the home appliances 13 of this embodiment comprise a smoke detector 13d and an alarm 13e. The smoke detector 13d is monitored by a service provider server 11d of a provider D. The alarm 13e is monitored by a service provider server 11e of a provider E. In this embodiment, a home 7 in the east and a home 8 in the west are next to each other. The home 7 is equipped with the smoke detector 13d. The home 8 is equipped with the alarm 13e. If the home 7 in the east has a fire accident, the smoke detector 13d in the home 7 will detect the widespread smoke. Consequently, the fire extinguishing sprinkler is activated to extinguish the fire. At the same time, the signal from the smoke detector 13d is transmitted to the service provider server 11e of the provider E through the gateway 12. Moreover, according to the fire condition of the home 7 in the east, the service provider server 11e sends a corresponding command to the alarm 13e of the home 8 in the west. In response to the command, the alarm 13e generates a warning sound. In other words, the use of the gateway 12 can enhance the harmony of various function components of the smart home system.

From the above descriptions, the present invention provides a smart home system. The smart home system has a gateway that is compatible with plural service providers. Consequently, the service programs provided by different service providers can be adopted by the smart home system without the incompatible problem. Under this circumstance, the home lives become more systematic. Moreover, the permissions of various service providers to monitor the home appliances and the monitored contents can be managed by the system architecture supplier through the gateway.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A smart home system (1), **characterized in that** comprising:
plural home appliances (13);
plural service provider servers (11); and
a Gateway (12) in communication with the plural home appliances (13) and the plural service provider servers (11), wherein the Gateway (12) comprises:
an intermediate module (121) comprising an access control list database (1211) and a service installer (1212), wherein the access control list database (1211) stores plural digital signatures, and plural service programs are verified according to the plural digital signatures; and
a wireless receiver module (1231) in wireless communication with the plural home appliances (13),
wherein after the plural verified service programs are installed in the Gateway (12) through the service installer (1212), the service provider servers (11) have access rights to access and control the corresponding home appliances (13).

2. The smart home system (1) according to claim 1, **characterized in that** the access control list database (1211) stores the plural digital signatures, an access right lookup table about a relationship between the plural service provider servers (11) and the home appliances (13), a schedule distribution table about a relationship between the plural service programs and the plural home appliances (13) and an operation system resource table about the use of the intermediate module (121) by the service programs.

3. The smart home system (1) according to claim 1, **characterized in that** the Gateway (12) further comprises a user interface (120), wherein the user interface (120) comprises a graphical interface (1201), a Command Line Interface (1202), a syslog (1203), a Simple Network Management Protocol agent (1204), a Message Queuing Telemetry Transport client (1205) and the plural service programs.

4. The smart home system (1) according to claim 3, **characterized in that** the intermediate module (121) further comprises an Event processor (1213), wherein the Event processor (1213) receives an event notification signal from the plural home appliances (13) and sends the event notification signal to the syslog (1203), the Simple Network Management Protocol agent (1204), the Message Queuing Telemetry Transport client (1205) or the plural service programs.

5. The smart home system (1) according to claim 3, **characterized in that** the graphical interface (1201) provides a corresponding graphical interface (1201) to a system architecture supplier (9) and/or a service provider, so that the plural home appliances (13) are monitored and managed by the system architecture supplier (9) and/or the service provider through the corresponding graphical interface (1201).

6. The smart home system (1) according to claim 3, **characterized in that** via the Command Line Interface (1202), a system architecture supplier (9) inputs a character command to manage the plural home appliances (13).

7. The smart home system (1) according to claim 3, **characterized in that** the Message Queuing Telemetry Transport client (1205) provides a Message Queuing Telemetry Transport communication protocol interface to a service provider, so that the plural home appliances (13) is monitored by the service provider.

8. The smart home system (1) according to claim 3, **characterized in that** a system architecture supplier (9) has a permission to manage and control the Command Line Interface (1202), the syslog (1203) and the Simple Network Management Protocol agent (1204).

9. The smart home system (1) according to claim 4, **characterized in that** the Gateway (12) further comprises at least one of an input/output alarm (1232), an indication light (1233), a button (1234), a Universal Serial Bus interface (1235), a NAND flash memory (1236) and a switch (1237).

10. The smart home system (1) according to claim 9, **characterized in that** the Gateway (12) further comprises a driving unit (122), wherein a signal from at least one of the wireless receiver module (1231), an alarm input of the input/output alarm (1232), the button (1234) and the switch (1237) is transmitted to the Event processor (1213) through the driving unit (122), wherein signals from the plural service programs are received by the intermediate module (121) and further transmitted to at least one of the wireless receiver module (1231), an alarm output of the input/output alarm (1232), the indication light (1233), the Universal Serial Bus interface (1235), the NAND flash memory (1236) and the switch (1237) through the driving unit (122).

11. The smart home system (1) according to claim 1, **characterized in that** the wireless receiver module (1231) is a Z-wave wireless receiver module, and the plural home appliances (13) are Z-wave home appliances.
